# EUROPÄISCHE PATENTSCHRIFT

(11) **EP 1 121 388 B1**
(45) Veröffentlichungstag und Bekanntmachung des Hinweises auf die Patenterteilung: **19.01.2005**
(21) Anmeldenummer: 99949004.8
(22) Anmeldetag: 15.10.1999
(51) Int. Cl.: C08K 5/00, C08L 77/00, C08K 5/02

(54) **MIT KUPFERKOMPLEXEN UND ORGANISCHEN HALOGENVERBINDUNGEN STABILISIERTE POLYAMIDZUSAMMENSETZUNG**
POLYAMIDE COMPOSITION STABILIZED WITH COPPER COMPLEXES AND ORGANIC HALOGEN COMPOUNDS
COMPOSITION DE POLYAMIDE STABILISEE AVEC DES COMPLEXES DE CUIVRE ET DES COMPOSES HALOGENES ORGANIQUES

(30) Priorität: 15.10.1998 DE 19847627
(43) Veröffentlichungstag der Anmeldung: 08.08.2001
(73) Patentinhaber: L. Brüggemann KG, 74076 Heilbronn (DE)
(72) Erfinder: TITZSCHKAU, Klaus, D-71543 Wüstenrot (DE)
(74) Vertreter: Grünecker, Kinkeldey, Stockmair & Schwanhäusser Anwaltssozietät
(86) Internationale Anmeldenummer: PCT/EP1999/007847
(87) Internationale Veröffentlichungsnummer: WO 2000/022035

(56) Entgegenhaltungen:
- DE-A- 19 615 484
- GB-A- 1 147 216

## Beschreibung

Die vorliegende Erfindung betrifft stabilisierte Polyamidzusammensetzungen, die Verwendung von spezifische Stoffkombinationen zur Stabilisierung von Polyamiden und Verfahren zur Stabilisierung von Polyamiden.

Polymere werden in der Hitze leicht durch Oxidation abgebaut, was zur Versprödung des Materials und zum mechanischen Versagen der daraus hergestellten Produkte führt. Man setzt daher bestimmte chemische Verbindungen zu, die den Versprödungszeitpunkt in unterschiedlicher Wirksamkeit hinausschieben können. Diese sogenannten Antioxidantien sind meistens auf Basis von Phenol- Amin- oder Phosphor-Derivaten aufgebaut. Spezielle Varianten von Antioxidantien sind auch bei Polyamiden im Einsatz. Die hierbei besonders wirksame Stoffklasse, die bei anderen Polymeren keine Wirksamkeit hat, sind die sogenannten Kupferstabilisatoren.

Derartige Stabilisierungssysteme sind seit langem bekannt und werden in großem Maße bei der Herstellung von Polyamiden eingesetzt, z.B. für Polyamidfasern, aus denen Reifencord hergestellt wird, sowie für Polyamidspritzgußteile für technische Anwendung, besonders im Maschinenbau (PKW) und der Elektroindustrie (Schalter, Leiterplatten).

Diese Kupferstabilisatoren bestehen in der Regel aus zwei Komponenten, nämlich einem Gemisch von Kupferverbindungen und speziellen Halogensalzen. Die üblichen Kupferverbindungen sind die Kupfer(I)halogenide sowie Kupfersalze, wie Kupferacetat, Kupfersulfat oder Kupferstearat, und die Kupferkomplexe, beispielsweise Kupferacetylacetonat. Damit diese Verbindungen als Antioxidantien wirksam sind, müssen Halogenverbindungen in großem Überschuß zugegeben werden. Verwendet werden dabei insbesondere Kaliumiodid aber auch Kaliumbromid. Die verwendete Menge ist dabei üblicherweise so gewählt, daß das Molverhältnis Kupfer: Halogen 1 : 5-15 beträgt. Die empfohlene Zugabemenge liegt in der Regel bei 30 bis 200 ppm Kupfer, d.h. 150 bis 3000 ppm Halogen.

Diese Kupferstabilisatoren führen zu stabilisierten Polyamidprodukten, die kurzfristig von 150 bis 180°C thermisch belastet werden können, ohne daß durch Luftsauerstoff bis zur Versprödung abgebaut wird. Die Haltbarkeit bei 150°C kann 1000 bis 2000 Stunden bis zum Abfall der mechanischen Eigenschaftswerte auf 50% des Ausgangswertes betragen.

Allerdings weisen die herkömmlichen Kupferstabilisatorsysteme einige schwerwiegende Nachteile auf.

Polyamide nehmen im Gebrauchszustand (konditioniert) ca. 3% Wasser auf. Dadurch werden bei Temperaturwechseln wasserlösliche Bestandteile aus dem Polyamid an die Oberfläche extrahiert, was zu einer Belagsbildung führt. Werden nun Kupfer-, Kalium- oder andere lösliche Halogenide eingesetzt, kommen diese an die Oberfläche und bilden einen hygroskopischen, meist sauer reagierenden Belag. Hierdurch wird die Kriechstromfestigkeit beeinträchtigt. Bei elektrischen Bauteilen kann es hierdurch zum Versagen kommen. Beim Kontakt mit Metallen kommt es an diesen Kontaktstellen zu verstärkter Korrosion. Auflagen der Auto- und Elektroindustrie im Hinblick auf Kriechstromfestigkeit lassen sich so nur noch schwer erfüllen.

Bei der Herstellung stabilisierter Polyamide muß unbedingt darauf geachtet werden, daß die zum Einsatz kommenden Stabilisatoren sehr feinteilig sind und sehr gleichmäßig in die Polyamidmasse eingearbeitet werden. Ein Problem stellt hierbei die Agglomerationsneigung der üblicherweise verwendeten Stoffe dar. Die Ausgangsrohstoffe müssen daher feinvermahlen und gegen Reagglomeration geschützt werden. Die Zugabe selber läßt sich bei den üblicherweise verwendeten geringen Mengen nur schwer kontrollieren, daher wird meistens ein Vorkonzentrat (Masterbatch) hergestellt, das dann zugegeben wird. Auch dann ist eine derartige heterogene Vermischung von festen Partikeln in einer Schmelze nie optimal, verglichen mit dem hypothetischen Fall, daß der Stabilisator selbst unter den Verarbeitungsbedingungen aufschmelzen würde und homogen verteilbar wäre. Die kristallinen Partikel der Stabilisatorsalze beeinflussen die physikalischen Kennwerte der Polyamide auch dann negativ, wenn sie sehr fein verteilt sind. Dies beruht nicht nur auf möglichen Inhomogenitäten bei der Verteilung, sondern auch darauf, daß feine Partikel in Polyamiden als Kristallisationskeime wirken und so eine erhöhte Kristallinität in Polymeren hervorrufen, was zu teilweise unerwünschten Nebenwirkungen führt. So kann die Schlagzähigkeit um 20 bis 30% gegenüber dem Ausgangswert der nicht stabilisierten Polyamidzusammensetzung abfallen.

Kupferverbindungen rufen weiterhin in Polyamiden nach deren Konditionierung meist eine blaue oder grünliche Verfärbung hervor. Bei glasfaserverstärkten Typen kann durch die starke Scherung bei der Verarbeitung zusätzlich eine Braunverfärbung durch die Bildung von Kupferoxid auftreten. Besonders störend sind die während eines Produktionszyklus auftretenden Farbschwankungen, was den Einsatz so hergestellter Compounds für farbneutrale oder bunt eingefärbte Produkte nicht oder nur eingeschränkt zuläßt. Deswegen werden solche Polyamidtypen überwiegend schwarz eingefärbt eingesetzt.

Kupfersalz/Halogensalz-Stabilisatoren werden oft schon während der Polymerisation als wäßrige Lösung zugegeben, um so die Dispergierung zu optimieren. Ein Nachteil ist hierbei aber, daß es zu Ablagerungen von metallischem Kupfer oder Kupfer-oxiden an den Metalloberflächen der Kessel und der Schmelzaustragungsextruder kommt, wodurch es zu Farbschwankungen und dadurch zu Produktionsunter-brechungen kommt. Beim Faserspinnen treten femer häufig Ablagerungen an den Düsen auf, was zu Abrissen und zu zusätzlichen Stillstandszeiten führt.

Weiterhin ist die Haltbarkeit der mit konventionellen Stabilisatoren stabilisierten Polyamide bei Temperaturen oberhalb von 150°C nicht ausreichend.

Im Hinblick auf diese Nachteile wurden verschiedene Verbesserungen vorgeschlagen. Die GB-A-1 147 216 offenbart stabilisierte Polyamide, enthaltend einen Kupfer-Lactam-Komplex und organische Halogenide.

Weiterhin offenbaren die DE-A-1237309, DE-A-1245591, DE-A-1259094 und die NL-A-6501290 die Verwendung von Kupferphosphinkomplexen zur Stabilisierung von Polyamiden. Diese Stabilisatoren dienen dabei der verbesserten Wärmestabilisierung. Die DE-A-1245591 und die DE-A-1259094 offenbaren darüberhinaus, daß die Stabilisatorwirkung der Kupferphosphinkomplexe durch Zusatz von lodsalzen verbessert werden kann. Die DE-A-19 615 484 offenbart oxidationsstabilisierte Polyamidformmassen, enthaltend eine Kupferverbindung, erhalten durch Umsetzung von Kupfer (I) salze mit Phosphinchelatliganden.

Diese Stabilisatorsysteme sind allerdings immer noch nachteilig im Hinblick auf Kriechstromfestigkeit, Wärmestabilität bei Temperaturen oberhalb von 150°C sowie Extraktionsstabilität.

Es ist daher die Aufgabe der vorliegenden Erfindung, eine stabilisierte Polyamidzusammensetzung anzugeben, die die oben genannten Nachteile nicht aufweist.

Diese Aufgabe wird erfindungsgemäß durch eine stabilisierte Polyamidzusammensetzung gelöst, die dadurch gekennzeichnet ist, daß als Stabilisator mindestens ein Komplex des Kupfers sowie mindestens eine organische Halogenverbindung gemäß Anspruch 1 enthalten ist. Bevorzugte Ausführungsformen sind in der Unteransprüchen definiert. Die korrespondierende Verwendung dieser Komponenten ist ebenfalls in den Ansprüche definiert.

Weiterhin stellt die vorliegende Erfindung ein Verfahren zur Herstellung einer stabilisierten Polyamidzusammensetzung zur Verfügung, umfassend das Mischen mindestens eines Komplexes des Kupfers sowie mindestens einer organischen Halogenverbindung gemäß Anspruch 1 mit mindestens einem Polyamid. Bevorzugte Ausführungsformen sind wiederum in den Unteransprüchen definiert.

Weiterhin stellt die vorliegende Erfindung eine stabilisierte Polyamidzusammensetzung zur Verfügung, dadurch gekennzeichnet, daß als Stabilisator mindestens ein Komplex des Kupfers mit einer Phosphinverbindung und/oder Mercaptobenzimidazolverbindung enthalten ist, welcher Halogen-Kohlenstoff-Bindungen aufweist.

Überraschend wurde gefunden, daß die erfindungsgemäße stabilisierte Polyamidzusammensetzung in der Lage ist, die Nachteile des Standes der Technik weitgehend zu vermeiden. Die Nachteile des Standes der Technik, d.h. mangelnde Kriechstromfestigkeit, ungenügende Dauerstabilität bei Temperaturen oberhalb von 150°C sowie unerwünschte Verfärbung des stabilisierten Polyamidproduktes, treten bei der erfindungsgemäßen stabilisierten Polyamdizusammensetzung nicht oder nur in verschwindend geringem Maße auf.

Erfindungsgemäß können alle üblichen Polyamide eingesetzt werden. Polyamide sind Polymere mit wiederkehrenden Carbonamidgruppen -CO-NH- in der Hauptkette. Sie bilden sich aus
(a) Aminocarbonsäuren oder deren funktionellen Derivaten, z.B. Lactamen; oder aus
(b) Diaminen und Dicarbonsäuren oder deren funktionellen Derivaten.

Durch Variationen der Monomerbausteine sind Polyamide in großer Vielfalt zugänglich. Die wichtigsten Vertreter sind Polyamid 6 aus ε-Caprolactam , Polyamid 66 aus Hexamethylendiamin und Adipinsäure, Polyamid 610 und 612, Polyamid 11, Polyamid 12, PACM-12 sowie Polyamid 6-3-T und die Aramide.

Erfindungsgemäß können aber auch alle weiteren Polyamide stabilisiert werden, beispielsweise Copolyamide oder Blockcopolymere von Polyamiden mit Polyestern. Es ist auch möglich Blends aus Polyamiden mit anderen Polymeren zu verwenden.

Besonders bevorzugt sind dabei Polyamid 6 sowie Polyamid 66.

Erfindungsgemäß können alle Kupferkomplexe verwendet werden. Typische Beispiele von Komplexliganden sind die Triphenylphosphine, Mercaptobenzimidazole, EDTA, Acetylacetonate, Glycin, Ethylendiamine, Oxalate, Diethylentriamine, Triethylentetraamine, Pyridine, Diphosphone und Dipyridyle.

Diese Liganden können einzeln oder in Kombination zur Komplexbildung eingesetzt werden. Die dazu nötigen Synthesen sind dem Fachmann bekannt oder in der Fachliteratur zur Komplexchemie beschrieben. Wie üblich können diese Komplexe neben den oben genannten Liganden noch typische anorganische Liganden enthalten, wie Wasser, Chlorid, Cyanoliganden usw..

Bevorzugt sind Kupferkomplexe mit den Komplexliganden Triphenylphosphine, Mercaptobenzimidazole, Acetylacetonate und Glycin. Insbesondere bevorzugt sind Triphenylphosphine und Mercaptobenzimidazole.

Bevorzugte erfindungsgemäß eingesetzte Komplexe des Kupfers werden üblicherweise durch Reaktion von Kupfer(I)ionen mit den Phosphin- bzw. Mercaptobenzimidazolverbindungen gebildet. Beispielsweise können diese Komplexe durch Umsetzung von Triphenylphosphin mit einem in Chloroform suspendierten Kupfer(I)halogenid erhalten werden (G. Kosta, E. Reisenhofer und L. Stafani, J. Inorg. Nukl. Chem. 27 (1965) 2581). Es ist aber auch möglich, Kupfer(II)verbindungen mit Triphenylphosphin reduktiv umzusetzen, um so die Kupfer(I)additionsverbindungen zu erhalten (F.U. Jardine, L. Rule, A.G. Vohrei, J. Chem. Soc. (A) 238-241 (1970)).

Die erfindungsgemäß verwendeten Komplexe können aber auch durch jedes weitere geeignete Verfahren hergestellt werden. Geeignete Kupferverbindungen zur Herstellung dieser Komplexe sind die Kupfer(I)-oder Kupfer(II)salze der Halogenwasserstoffsäuren, der Cyanwasserstoffsäure oder die Kupfersalze der aliphatischen Carbonsäuren. Beispiele für geeignete Kupfersalze sind Kupfer(I)chlorid, Kupfer(I)bromid, Kupfer(I)iodid, Kupfer(I)cyanid, Kupfer(II)chlorid, Kupfer(II)acetat oder Kupfer(II)stearat.

Besonders bevorzugt sind dabei Kupfer(I)iodid sowie Kupfer(I)cyanid.

Prinzipiell sind alle Alkyl- oer Arylphosphine geeignet. Beispiele erfindungsgemäß einsetzbarer Phosphine sind Triphenylphosphin sowie die substituierten Triphenylphosphine, Trialkylphosphine, aber auch Diarylphosphine sind einsetzbar. Ein Beispiel eine geeigneten Trialkylphosphins ist Tris-(n-butyl)phosphin. Triphenylphosphin ist aufgrund der kommerziellen Verfügbarkeit vor allem in wirtschaftlicher Hinsicht bevorzugt. Generell sind aber die Triphenylphosphinkomplexe stabiler als die Trialkylphosphinkomplexe.

Beispiele geeigneter Komplexe lassen sich durch die folgenden Formeln darstellen:
[Cu(PPh₃)₃X], [Cu₂X₂(PPh₃)₃], [Cu(PPh₃)X]₄ sowie [Cu(PPh₃)₂X], wobei X ausgewählt ist aus Cl, Br, I, CN, SCN oder 2-MBI.

Erfindungsgemäß einsetzbare Komplexe können aber auch zusätzlich noch weitere Komplexliganden enthalten. Beispiele davon sind Bipyridyl (z.B. CuX (PPh₃) (bipy), wobei X Cl, Br oder I ist), Bichinolin (z.B. CuX (PPh₃) (biquin), wobei X Cl, Br oder I ist) sowie 1,10-Phenanthrolin, o-Phenylenbis(dimethylarsin), 1,2-Bis(diphenylphosphino)ethan und Terpyridyl.

Diese Komplexe sind im allgemeinen elektrisch nicht leitend und diamagnetisch. Sie sind üblicherweise farblos und fallen als wasserunlösliche Kristalle an, die unzersetzt schmelzen. In polaren organischen Lösungsmitteln, wie DMF, Chloroform und heißem Ethanol, sind die Komplexe leicht löslich. Die Schmelzpunkte dieser Komplexe liegen im Bereich von 150 bis 170°C. Die tetrameren Kupferkomplexe haben deutlich höhere Schmelzpunkte von 210 bis 270°C. Bevorzugt sind Cu-Komplexe mit möglichst wenig Phosphinliganden, vom wirtschaftlichen Standpunkt aus. Bevorzugt sind daher insbesondere die tetrameren Komplexe.

Die organische Halogenverbindung kann irgendeine organische Halogenverbindung sein. Im Hinblick auf Verarbeitungsstabilität sowie zur Verhinderung von Versprödung durch Austreten der organischen Halogenverbindung aus der stabilisierten Polyamidzusammensetzung sollte das Molekulargewicht der organischen Halogenverbindung so gewählt sein, daß die Verbindung nicht zu leicht flüchtig ist. Eine nicht zu geringe Flüchtigkeit ist auch vorteilhaft im Hinblick auf Arbeitsplatzsicherheit sowie im Hinblick auf die toxikologische Einordnung der stabilisierten Polyamidzusammensetzungen. Solch leicht flüchtige organische Halogenverbindungen weisen darüberhinaus eine nachteilige starke Verfärbungsneigung auf, obwohl auch sie die sonstigen Stabilisatoranforderungen erfüllen.

Bevorzugt als organische Halogenverbindungen sind insbesondere bromhaltige Verbindungen und/oder aromatische Verbindungen.

Im allgemeinen sind aber alle organischen Halogenverbindungen verwendbar. Beispiele geeigneter organischer Halogenverbindungen sind aromatische Verbindungen, wie Dekabromdiphenyl, Dekabromdiphenolether, chlorierte bzw. bromierte Styrololigomere, Polydibromstyrol, Tetrabrombisphenol-A, Tetrabisphenol-A-Derivate, wie beispielsweise Epoxyderivate, wie BEB 6000 sowie BEB 500C deren Formeln unten gezeigt sind, sowie chlorierte Dimethanodibenzo(a,e)cyclooktenderivate. Beispiele geeigneter aliphatischer Verbindungen sind Chlorparaffin, Polyvinylchlorid, Polyvinylidenchlorid, Polytetrafluoroethylen oder Fluorkautschuk.

Geeignet sind auch organische Verbindungen, die weitere Heteroatome enthalten. Beispiele solcher Verbindungen sind halogenierte aliphatische Phosphate, halogenierte aromatische Phosphate sowie halogenhaltige organische Verbindungen, die Schwefel oder Stickstoffatome aufweisen. Beispiele geeigneter Phosphate sind Tris(tribromneopentyl)phosphat (Phosphat 1) sowie Dibromdioxaphosphorinanderivate und chlorhaltige Polyphosphonate.

Diese Verbindungen können einzeln oder in Kombination eingesetzt werden.

Liegen Kohlenstoff-Halogenbindungen im Komplex des Kupfers vor, so sind sie bevorzugt Kohlenstoff-Brombindungen. Insbesondere bevorzugt sind dabei die Verbindungen die TPP-Br₆ oder 2-MBI-Br₂ enthalten, insbesondere TPP-Br₆/CuJ.

Prinzipiell sind aber alle zuvor beschriebenen Phosphine und Komplexliganden auch hier verwendbar, unter der Voraussetzung, daß die Phosphine halogeniert sind.

Die erfindungsgemäßen Polyamidzusammensetzungen weisen gegenüber den bekannten stabilisierten Polyamiden einige wesentliche Vorteile auf.

Die Menge an Kupferkomplex, die in den stabilisierten Polyamidzusammensetzungen verwendet wird, ist nicht beschränkt, solange die mechanischen Eigenschaften des Polyamids nicht negativ beeinträchtigt werden. Überlicherweise liegt sie zwischen 10 und 1000 ppm Kupfer, bezogen auf die Gesamtzusammensetzung. Bevorzugt werden 20 bis 700, insbesondere bevorzugt 50 bis 150 ppm Kupfer eingesetzt.

Die Zugabemenge für die halogenhaltige organische Verbindung unterliegt keiner besonderen Beschränkung. Üblicherweise werden solche Mengen zugegeben, daß 50 bis 30.000 ppm Halogen, bezogen auf die Gesamtzusammensetzung, eingesetzt werden. Bevorzugt werden 100 bis 10.000, insbesondere bevorzugt 500 bis 1.500 ppm Halogen eingesetzt.

So ergibt sich im allgemeinen ein Verhältnis von Kupfer zu Halogen in den stabilisierten Polyamidzusammensetzungen von 1:1 bis 1:3000. Bevorzugt ist der Bereich von 1:2 bis 1:100, insbesondere bevorzugt von 1:5 bis 1:15 (jeweils Molverhältnis).

Höhere Zugaben führen im allgemeinen zu keiner Verbesserung der Stabilisatorwirkung, Polyamide mit mehr als 5% halogenierten organischen Verbindungen weisen eine deutlich schlechtere Stabilität auf. Sie zeigen vermehrte Spaltung von Polymerketten, was zu vorzeitiger Versprödung der Bauteile und starker Verfärbung führt. Bevorzugt liegt der Gehalt an halogenierten organischen Verbindungen bei weniger als 3 Gew.-%, insbesondere bevorzugt bei weniger als 1 Gew.-%.

Zunächst ist die Wärmestabilität bei Temperaturen oberhalb von 150°C stark verbessert. Weiterhin sind die stabilisierenden Komponenten nicht in Wasser löslich, d.h. auch nicht mit Wasser extrahierbar. Dadurch haben die erfindungsgemäßen Polyamidzusammensetzungen gegenüber salzhaltigen Stabilisatoren den Vorteil, daß sie in Polyamiden für elektrische Bauteile eingesetzt werden können. Da keine Salze, die die Leitfähigkeit erhöhen würden, vorhanden sind oder während der Gebrauchsdauer an die Oberfläche der Bauteile kommen können, sind die Bedingungen einer hohen Kriechstromfestigkeit (CTI-Wert) und hohen Durchschlagfestigkeit, wie sie von naturreinen Polyamiden erfüllt werden, auch durch die erfindungsgemäßen Polyamidzusammensetzungen erfüllt.

Die Kriechstromfestigkeit, die als CTI-Wert bestimmt wird, wird durch die erfindungsgemäßen Zusammensetzungen stark verbessert. Dadurch wird der Einsatzbereich der erfindungsgemäßen Polyamidzusammensetzungen auf Bauteile ausgeweitet, die im Bereich der Elektro- bzw. Elektronikindustrie eingesetzt werden.

Polyamide für elektrische Bauteile sollten CTI-Werte von 600, mindestens aber 550 aufweisen. Dieser Wert wird von reinem Polyamid erreicht. Der CTI-Wert wird in Übereinstimmung mit der DIN-IEC 112 bestimmt.

Bei Verwendung herkömmlicher Kupfer/Halogensalzstabilisatorsysteme kommt es dagegen häufig zu Ausfällen durch Kurzschlüsse, besonders auch auf Grund der zunehmenden Miniaturisierung im Apparatebau. Gleichzeitig wird eine sehr gute Versprödungsstabilität bei Dauerwärmebelastung verlangt, die bei Polyamiden bislang nicht gleichzeitig-mit der hohen Kriechstromfestigkeit erreicht werden konnte. Stabilisatoren auf Basis sterisch gehinderter Phenole, Phosphite oder Amine, die die elektrischen Anforderungen erfüllen, ergeben nicht die erforderliche Langzeitstabilität. Diese konnte nur durch KJ- oder KBr-haltige Stabilisatoren erhalten werden. Man konnte also zur Erreichung der geforderten Dauerwärmestabilität nicht auf diese herkömmlichen Kupferstabilisatoren verzichten, obwohl die Anforderung an die elektrischen Eigenschaften nicht erfüllbar waren. Durch die erfindungsgemäßen Polyamidzusammensetzungen sind auch diese gestiegenen Anforderungen erfüllbar. Die elektrischen Eigenschaften der Polyamide verändem sich durch die Zugabe der stabilisierenden Komponenten nicht, während gleichzeitig die erforderliche Dauerwärmestabilität erreicht wird.

Die stabilisierenden Komponenten lösen sich bei der Verarbeitung sehr gut in der Polyamidschmelze auf, d.h. es erfolgt eine sehr gute Dispergierung und homogene Verteilung. Das vereinfacht die Herstellung dieser Polyamidzusammensetzungen. Gleichzeitig sind die stabilisierenden Komponenten sehr gut mit allen Arten an Polyamiden verträglich. So kommt es nicht zu Ausblühungen an den Kunststoffverarbeitungsmaschinen (Düsen, Schnecken, Formen) sowie an den gefertigten Kunststoffteilen bzw. -fasern. Zusätzlich führt diese sehr gute Dispersion zu verbesserten mechanischen Eigenschaften, wie Schlagzähigkeit, im Vergleich mit konventionellen Salzstabilisatoren, beispielsweise CuJ, KJ, KBr.

Weiterhin zeigen die erfindungsgemäßen Polyamidzusammensetzungen praktisch keine Verfärbung durch die stabilisierenden Komponenten. Hierdurch ist es möglich, mit Pigmenten eingefärbte Polyamide zu erhalten, ohne daß es zu Farbverschiebungen kommt. Sogar mit TiO₂-Pigmenten eingefärbte Teile behalten ihr strahlendes Weiß bei. Dies eröffnet eingefärbten Polyamiden ein zusätzliches Anwendungsfeld dort, wo eine erhöhte Dauerwärmestabilität erforderlich ist, wie sie bislang nur mit herkömmlichen Stabilisatoren annähemd erreichbar war, wo diese aber wegen ihrer verfärbenden Eigenschaften bisher nicht verwendet werden konnten. Die erfindungsgemäßen Polyamidzusammensetzungen haben somit den Vorteil, daß sie höhere Dauertemperaturstabilität zeigen als andere stabilisierte Polyamidzusammensetzungen und gegenüber diesen auch wenig oder sogar gar nicht verfärbend sind.

Zur Färbung der erfindungsgemäßen Polyamidzusammensetzungen eignen sich alle üblichen Pigmente, wie beispielsweise Titandioxid, Bleiweiß, Zinkweiß, Litopone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurtergrün, Molybdänorange und -rot, Chromorange und -rot, Eisenoxidrot, Chromoxidgrün, Strontiumgelb, Chromoxidgrün, Molybdänblau, Kreide, Ocker, Umbra, Grünerde, Terra di Sienna gebrannt und Graphit.

Ein weiterer Vorteil der erfindungsgemäßen Polyamidzusammensetzungen ist die verbesserte UV-Stabilisierung von Polyamiden. Der Einsatz von herkömmlichen UV-Stabilisatoren, insbesondere von sogenannten HALS(Hindered Aminic Light Stabilizer)-Typen, ergibt eine hervorragende Langzeitstabilisierung von Polyamiden, die im Freien unter Einwirkung von Sonne und Regen eingesetzt werden, wie beispielsweise Fasem für Kunstrasen oder Türgriffe oder Rückspiegelgehäuse bei PKW's, die mit herkömmlichen Systemen bisher nicht zu erreichen war. Herkömmliche Stabilisatorsysteme haben den Nachteil, daß sich bei der Dauerwitterung an der Oberfläche der Polyamidteile ein weißlicher oder gelblicher Belag bildet. Dieser Belag besteht aus wasserextrahierbaren Bestandteilen (Salzen). Die erfindungsgemäßen Polyamidzusammensetzungen zeigen diesen Nachteil nicht; es bildet sich keinerlei Belag. Außerdem erhält man deutlich längere Standzeiten bis zu einer mechanischen Schädigung der Teile, als es bisher möglich war. Übliche Stabilisatorkombinationen von HALS-UV-Verbindungen mit Antioxidantien auf Basis von sterisch gehinderten Phenolen und organischen Phosphiten, die allgemein verwendet werden, erreichen bestenfalls 50% der hier gefunden Werte.

Die erfindungsgemäßen Polyamidzusammensetzungen sind auch hervorragend im Hinblick auf ihre Hydrolysestabilität. Sie sind verbessert in Langzeitstabilität unter sauren und alkalischen Bedingungen, gegenüber Salzlösungen, Glykol-Wasser-Gemischen sowie gegenüber heißen Fetten und Ölen und organischen Lösungsmitteln. Das heißt, der üblicherweise unter diesen Bedingungen schnell auftretende Verlust der mechanischen Festigkeit (Schlagzähigkeit, Zugfestigkeit) sowie die Versprödungsneigung der Polyamide sind drastisch verringert und die Dauergebrauchsfähigkeit deutlich verbessert.

Die erfindungsgemäßen Polyamidzusammensetzungen können weiterhin ohne Einschränkung mit anderen Additiven kombiniert werden, wie beispielsweise mit Gleitmitteln, Weichmachern, Kristallisations-beschleunigern und Pigmenten, ohne daß der gewünschte Stabilisierungseffekt beeinträchtigt wird. In einigen Fällen werden auch die verwendeten Additive gegen thermischen Abbau und Verfärbung in Polyamiden stabilisiert, d.h. mit Weichmachern, wie BBS, oder Wachsen, wie Montanaten, ausgerüstete Polyamide neigen nicht mehr so stark zur Vergilbung, wenn sie in den erfindungsgemäßen Polyamidzusammen-setzungen enthalten sind.

Polyamide, die mit Glasfasern, Glaskugeln, Mineralien oder sonstigen Verstärkungsmitteln ausgerüstet sind, zeigen gegenüber mit herkömmlichen Stabilisatoren stabilisierten Polyamidzusammensetzungen ganz erheblich verbesserte Dauerwärmealterungsstabilität.

Die erfindungsgemäßen Polyamidzusammensetzungen zeigen ihre verbesserte Stabilität insbesondere bei der Herstellung von Polyamidfasern. Aufgrund der vollständigen Löslichkeit der stabilisierenden Komponenten sowie der guten Verträglichkeit mit der Polyamidschmelze sind auch hohe Zugaben bis zu 1000 ppm Kupfer und mehr ohne Verarbeitungsprobleme möglich. Bei herkömmlichen Kupfer/Halogen-salzen-Stabilisatorsystemen ist dies bisher nicht möglich, ohne daß es zu Ablagerungen an den Spinndüsen kommt, wodurch die Fäden beim Spinnen reißen. Femer kommt es zu Ablagerungen von Kupferverbindungen, z.B. braunen Kupferoxiden, am Extruder, die sich nur schwer entfemen lassen und ebenfalls zu Produktionsstörungen führen. Bei den erfindungsgemäßen Polyamidzusammensetzungen treten diese Nachteile nicht auf; das Verspinnen der Polyamidschmelze wird in keiner Weise beeinträchtigt. So ist es möglich, das Produktionskampangen über Tage und sogar mehrere Wochen ohne unliebsame Unterbrechungen durchgefahren werden können. Dies ist ein großer Kostenvorteil bei der Produktion.

Das Spinnen von PA-Fasern erfolgt üblicherweise aus der Schmelze. Dazu wird üblicherweise zunächst das Polyamid aufgeschmolzen, gegebenfalls mit Additiven versetzt, und dann durch Spinndüsen gepresst. Anschließend erfolgt die Aushärtung der Fasem durch Abkühlen.

Die Herstellung der erfindungsgemäßen Polyamidzusammensetzungen erfolgt im allgemeinen durch Mischen mindestens eines Polyamids mit mindestens einer Kupferbindung und mindestens einer halogenhaltigen organischen Verbindung, die, wie in Anspruch 1 angegeben, definiert sind.

Dabei ist es möglich, die Komponenten in üblichen Mischeinrichtungen direkt miteinander zu vermischen, d.h. Polyamid und Stabilisatorkomponente werden miteinander aufgeschmolzen und vermischt Bevorzugt wird allerdings zunächst das Polyamid aufgeschmolzen und anschließend die Stabilisatorkomponente eingemischt. Insbesondere bevorzugt ist es, die Stabilisatorkomponente in Form einer Vormischung (Masterbatch) zum aufgeschmolzenen Polyamid zuzugeben. Dies vereinfacht insbesondere die Dosierung der stabilisierenden Komponenten.

Geeignete Mischvorrichtungen sind dem Fachmann geläufig und umfassen Mischwalzwerke, diskontinuierlich arbeitende Innenmischer und Kneter, kontinuierlich arbeitende Extruder und Kneter sowie statische Mischer. Bevorzugt ist dabei der Einsatz von kontinuierlich arbeitenden Extrudern, sowohl Einschnecken- als auch Doppelschneckenextruder, die eine gute Vermischung ermöglichen. Dabei wird üblicherweise das Polyamid zunächst im Extruder aufgeschmolzen, die stabilisierende Komponente kann dann durch geeignete Öffnungen eindosiert werden. Diese Verfahren sowie die dazu nötigen Vorrichtungen sind dem Fachmann geläufig.

Es ist aber auch möglich, die stabilisierenden Komponenten schon bei der Herstellung des Polyamids, d.h. der Monomermischung, zuzusetzen. Dadurch ist eine sehr gute Durchmischung ohne zusätzlichen Mischvorgang möglich, was Herstellungskosten und - zeiten senkt.

Wird bei der Herstellung der erfindungsgemäßen Polyamidzusammensetzungen ein Vorkonzentrat der stabilisierenden Komponenten verwendet, so kann dieses Vorkonzentrat in diskontinuierlich arbeitenden Mischem, die eine sehr gute, homogene Verteilung ermöglichen, hergestellt werden, beispielsweise in einem Buss-Kneter. Üblicherweise werden aber kontinuierliche Mischer verwendet, wie Doppelschraubenextruder oder ZSK-Extruder. Als Matrixmaterial wird dabei üblicherweise dasselbe Polyamid verwendet, das anschließend mit dem Vorkonzentrat vermischt wird. Es ist aber auch möglich, ein anderes Polyamid oder ein anderes Polymer zu wählen.

Weiter wurden die erfindungsgemäßen stabilisierten Polyamidzusammensetzungen dahingehend evaluiert, ob nicht noch eine weitere Verbesserung der Verfärbungsneigung zu erzielen ist. Überraschenderweise wurde dabei gefunden, daß eine weitere Reduzierung der Verfärbungsneigung durch den Zusatz von organischen Phosphiten oder anorganischen Phosphonaten oder anorganischen Hypophosphiten erreicht werden kann. Diese Substanzen sind als Farbstabilisatoren in Polyamiden bekannt. Bekannt war allerdings ebenfalls, daß diese Farbstabilisatoren häufig zur Bildung von Kupferoxiden mit Kupfersalzen führen, wodurch Grau- oder Braunschwarzverfärbungen hervorgerufen werden. Daher war es sehr überraschend, daß die erfindungsgemäße Kombination zu praktisch keiner Verfärbung führt, und daß die mit den erfindungsgemäßen Stabilisatorkomponenten teilweise auftretende Blauverfärbung nach Konditionierung sehr viel geringer ausfällt, wenn ein organisches Phosphit oder anorganisches Phosphonat oder anorganisches Hypophosphit zugesetzt wird. Die dabei teilweise auftretende leichte Restverfärbung läßt sich leicht überfärben und stellt für die Herstellung farbstabiler Polyamide keinen Nachteil mehr dar.

Weiterhin wurde gefunden, daß durch diesen Zusatz auch die Vergilbung der Polyamide bei Wärmelagerung verzögert werden kann. Dieser Effekt ist insbesondere beim Zusatz organischer Phosphite merklich.

Die erfindungsgemäß einsetzbaren organischen Phosphite sind Ester der phosphorigen Säure. Einsetzbar sind sowohl aliphatische als auch aromatische oder gemischte Ester. Typische Beispiele davon sind z.B. Dimethyl- und Diethylphosphit, Trimethyl- und Triethylphosphit sowie die als Additive in der Kunststoffverarbeitung bekannten organischen Phosphite. Typische Beispiele davon sind Tris(2,4-di-t-butylphenyl)phosphit (Phosphit 20), Bis(2,4-di-t-butylphenyl)pentaerythritoldiphosphit (Phosphit 21), Tetrakis(2,4-di-t-butylphenyl)4,4'-biphenylendiphosphonit (Phosphit 23), Distearylpentaerythritoldiphosphit, Diisooctylphosphit, Distearylphosphit, Triisodecylphosphit, Triisooctylphosphit, Trilaurylphosphit, Tristearylphosphit, Tris(dipropylenglycol)phosphit, Diphenylphosphit, Trisnonylphenylphosphit, Triphenylphosphit, Tris(p-nonylphenyl)phosphit. Solche Verbindungen sind unter den Handelsnamen Irgafos, Alkanox und Weston der Firmen Ciba, Weston und The Great Lakes erhältlich. Bevorzugt sind dabei insbesondere Phosphit 20, Phosphit 21, Phosphit 22 und Phosphit 23.

Erfindungsgemäß verwendbare anorganische Phosphonate sind Salze der Phosphonsäure. Als Salzbildner kommen dabei die Alkalimetalle, die Erdalkalimetalle sowie weitere übliche Metalle in Frage. Bevorzugt sind insbesondere Lithium, Kalium, Natrium, Magnesium, Calcium, Strontium, Barium und Aluminium. Insbesondere bevorzugt sind Natrium, Kalium, Magnesium und Calcium. Ein insbesondere bevorzugtes Phosphonat ist das Dinatriumhydrogenphosphonat.

Die erfindungsgemäß verwendbaren anorganischen Hypophosphite sind Salze der hypophosphorigen Säure. Im Hinblick auf die zur Salzbildung verwendbaren Metalle gilt das gleiche wie oben für die Phosphonate ausgeführt. Das Natriumsalz der hypophosphorigen Säure ist ein insbesonders bevorzugtes Beispiel der erfindungsgemäß verwendbaren Hypophosphite.

Die Zugabemenge der oben aufgeführten weiteren Additive liegt zwischen 0,005 und 1,0% (50 bis 10.000 ppm), vorzugsweise im Bereich von 0,05 bis 0,2% (500 bis 2.000 ppm) und insbesondere bevorzugt im Bereich von 0,075 bis 0,15% (750 bis 1.500 ppm). Diese Menge bezieht sich jeweils auf die Gesamtzusammensetzung.

Die einzusetzenden organischen Phosphite sind vorzugsweise schmelzbar, verarbeitungsstabil und extraktionsbeständig. Dadurch wird verhindert, daß phosphorige Säure abgespalten wird, die nachteilige Wirkungen auf die Gesamtzusammensetzung hat. Die oben aufgeführten organischen Phosphite, insbesondere die Typen 20, 21, 22 und 23 erfüllen diese Bedingungen besonders gut. Daher sind diese Verbindungen insbesondere bevorzugt.

Bei der Herstellung von erfindungsgemäß stabilisierten Polyamidzusammensetzungen hat sich darüberhinaus gezeigt, daß eine Zugabe des organischen Phosphits, anorganischen Phosphonats bzw. anorganischen Hypophosphits vorzugsweise erst im Anschluß an die Herstellung der mit den Stabilisatorkomponenten grundstabilisierten Zusammensetzung erfolgt. Wird zuerst eine erfindungsgemäß stabilisierte Polyamidzusammensetzung nach Anspruch 1 hergestellt und erst in einem weiteren Verarbeitungsschritt das organische Phosphit, das anorganische Phosphonat bzw. das anorganische Hypophosphit zugesetzt, so erhält man keinerlei Verfärbung mehr. Insbesondere bei den anorganischen Phosphonaten zeigt das oben beschriebene Verfahren insbesondere deutlich diesen Effekt. Dabei können das organische Phosphit, das anorganische Phosphonat oder das anorganische Hypophosphit als solche in reiner Form oder in Form einer Vormischung (Masterbatch) eingebracht werden. Im Hinblick auf diese Ausführungsform wird auf die vorherigen Ausführungen verwiesen, da hier die selben Verhältnisse Anwendung finden.

Die Herstellung der erfindungsgemäßen Polyamidzusammensetzungen erfolgt im allgemeinen durch Mischen mindestens eines Polyamids mit mindestens einer Kupferverbindung und mindestens einer halogenhaltigen organischen Verbindung, die wie in Anspruch 1 angegeben definiert sind.

Die folgenden Beispiele erläutern die Erfindung.

Die in den folgenden Beispielen getesteten Prüflinge wurden wie folgt hergestellt und getestet:

### Herstellung der Prüfkörper:

Die Stabilisatormischungen sowie Ca-Stearat als Gleitmittel wurden mit Polyamid-Granulat vorgemischt und über einen Extruder aufgeschmolzen, homogenisiert, als Strang kontinuierlich abgezogen und granuliert. Hierbei betrug die Cu-Konzentration stets 100 ppm, die Halogenkonzentration ca. 1000 ppm (0,1%) und die Ca-Stearat-Konzentration 0,3%. Nach dem Trocknen wurden aus den Granulaten auf einer Spritzgießmaschine Norm-Prüfstäbe zur Bestimmung der Schlagzähigkeit (DIN 53453) und der Biegefestigkeit (DIN 53452) hergestellt.

### Wärmealterung: DIN 53497, DIN 53446

In Wärmeumlaufschränken wurden die oben beschriebenen Prüfstäbe bei 130, 150 und 165°C solange aufbewahrt und gealtert, bis die Meßwerte bis unter 50% der Ausgangswerte abgefallen waren. Der Zeitraum bis zum Erreichen dieses Zustandes wird als Halbwertzeit bezeichnet und ist ein Maß für die Wärmealterungsstabilität des Polyamids und damit auch für die Wirksamkeit der eingesetzten Stabilisatoren. Da Polyamide unstabilisiert sehr schnell vergilben und verspröden (24 h bei 150°C) ist eine Verwendung ohne Stabilisierung in vielen technischen Anwendungen nicht möglich.

### Kriechstromfestigkeit (CTI-Werte):

Es wurden aus den oben beschriebenen Granulaten Prüfplättchen von 3x5 cm und 3 mm Dicke auf der Spritzgießmaschine hergestellt und gemäß der DIN-Norm IEC-112 geprüft.

### Farbmessung:

Die Verfärbung der Prüfplättchen wurde optisch beurteilt, zusätzlich wurde die Farbintensität durch die Messung des Helligkeitswerts bestimmt (DIN 6174; DIN 5033, Teil 1-7).

### Beispiel 1:

Stabilisierung von PA6 Natur, Wärmealterungsversuche bei 150°C, Vergleichsversuche mit anderen Kupferstabilisatoren, Zugabe 100 ppm Kupfer, 1000 ppm Halogen. Messung der Schlagzähigkeit bis zum Abfall auf den 50% Wert der Ausgangszähigkeit (Halbwertmessung); Messung der Kriechstromfestigkeit (CTI-Wert), Farbe Spritzfrisch und nach Konditionierung. Zusätzlich enthielten die Proben 20 bis 26 noch jeweils 1000 ppm Phosphit oder Phosphonat.

**Tabelle 1**

| | **Typ** | **Zusammensetzung** | **Halb- wertszeit (h)** | **CTI- Wert** | **Verfärbung spritzfrisch** | **Verfärbung nach Konditionierung** |
|---|---|---|---|---|---|---|
| 1 | Vergleich | PA6 Natur | 24 | 600 | farblos | farblos |
| 2 | Vergleich | CuJ/KJ | 1100 | 450 | farblos | hellgrün |
| 3 | Vergleich | Kupferacetat/KBr | 750 | 400 | farblos | hellblau |
| 4 | Vergleich | Kupferstearat/KJ | 800 | 450 | gelblich | blaugrün |
| 5 | " | TPP-CuCN | 700 | 600 | farblos | farblos |
| 6 | " | MBI-CuCl₂ | 500 | 600 | gelbstich | gelblich |
| 7 | Erfindung | TPP-CuJ/Phosphat 1 | 1400 | 600 | farblos | fast farblos |
| 8 | Erfindung | TPP-CuJ/PDBS | 1200 | 600 | farblos | fast farblos |
| 9 | Erfindung | TPP-CuCN/Phosphat 1 | 1400 | 600 | farblos | farblos |
| 10 | Erfindung | MBI-CuJ/Phosphat 1 | 950 | 600 | gelblich | gelblich |
| 11 | Erfindung | TPP-CuJ/Teflonwachs | 550 | 600 | farblos | farblos |
| 12 | Erfindung | TPP-CuJ/TBBA-EP-Oligomer 1 | 1200 | 600 | farblos | hellblau |
| 13 | Erfindung | MBI-CuJ/TBBA-EP-Oligomer 2 | 1000 | 600 | farblos | hellgelblich |
| 14 | Erfindung | TPPBr₂-CuJ | 1200 | 600 | farblos | hellgrün |
| 15 | Erfindung | TPP-CuJ/Chlorparaffin | 1100 | 600 | hellbraun | dunkelbraun |
| 16 | Erfindung | TPP-CuJ/Dechlorane plus | 1200 | 600 | beige | braun |
| 17 | Erfindung | Glycin-Kupfer/Phosphat 1 | 950 | 600 | beige | beige |
| 18 | Erfindung | Cu-Acetylacetonat/ Phosphat 1 | 900 | 600 | weißgrau | grünbeige |
| 19 | Erfindung | MBI-CuCl/Phosphat 1 | 1050 | 600 | farblos | schwach grün |
| 20 | Erfindung | TPP-CuJ/Phosphat 1/ Phosphit (20) | 1100 | 600 | farblos | blaßblau |
| | | | | | | |
| 21 | Erfindung | TPP-CuJ/Phosphat 1/ Phosphit (21) | 1200 | 600 | farblos | gering |
| 22 | Erfindung | TPP-CuJ/PDBS/ Phosphit (22) | 1100 | 600 | farblos | gering |
| 23 | Erfindung | TPP-CuJ/Phosphat 1/ Phosphit (23) | 1150 | 600 | farblos | gering |
| 24 | Erfindung | (TPP-CuJ/Phosphat 1) in Polyamid/Phosphit (20) | 1100 | 500 | farblos | gering |
| 25 | Erfindung | (TPP-CuJ/PDBS) in Polyamid/Phosphit (21) | 1200 | 600 | farblos | gering |
| 26 | Erfindung | (TPP-CuJ/PDBS) in Polyamid/Dinatriumhydroge n-phosphonat (24) | 1100 | 550 | farblos | gering |

Die Versuche belegen die überlegene Wirkung der erfindungsgemäß verwendeten Stabilisatoren, die verbesserte Kriechstromfestigkeit bei gleichzeitig verbesserter thermischer Stabilität zur Verfügung stellen.

**Tabelle 1 (Fortsetzung)**

| **Farbmessungen an Polyamidprüfkörpern (CIELab-Werte, DIN 6174):** | | | | | | |
|---|---|---|---|---|---|---|
| | **spritzfrisch** | | **nach Konditionierung** | | | |
| **Typ** | Verfärbung optisch | Helligkeit L-Wert | Verfärbung optisch | Helligkeit L-Wert | grün-rot a-Wert | blau-gelb b-Wert |
| 1 | farblos | 68,2 | farblos | 69,3 | -3,2 | -1,8 |
| 2 | farblos | 68,3 | hellgrün | 66,2 | -11,7 | 4,2 |
| 3 | farblos | 69,1 | hellblau | 68,2 | -7,8 | -1,5 |
| 4 | gelblich | 67,5 | blaugrün | 65,0 | -7,7 | 2,9 |
| 5 | farblos | 69,7 | farblos | 69,8 | -3,3 | -1,5 |
| 6 | farblos | 69,1 | hellblau | 69,9 | -7,3 | -3,5 |
| 7 | farblos | 70,2 | gelbgrün | 69,8 | -6,3 | 0,2 |
| 8 | farblos | 67,3 | blaugrün | 69,3 | -7,4 | 1,5 |
| 9 | farblos | 69,8 | fast farblos | 69,3 | -3,5 | 0,6 |
| 10 | farblos | 69,2 | fast farblos | 71,9 | -5,2 | 0,5 |
| 11 | farblos | 69,7 | hellblau | 68,4 | -8,8 | 4,0 |
| 12 | farblos | 69,0 | fast farblos | 69,3 | -7,5 | -1,2 |
| 13 | farblos | 69,3 | gelbgrün | 69,9 | -6,5 | 3,5 |
| 14 | farblos | 70,2 | hellgrün | 69,8 | -9,7 | 4,5 |
| 16 | beige | 53,17 | braun | 48,54 | -12,4 | -8,7 |
| 17 | beige | 66,94 | beige | 66,39 | -1,6 | 0,3 |
| 18 | weißgrau | 69,79 | grünbeige | 68,39 | -3,6 | 0,0 |
| 19 | farblos | 70,63 | schwach grün | 69,04 | -6,7 | 2,3 |
| 20 | farblos | 62,13 | hellblau | 59,81 | -3,5 | -1,6 |
| 21 | farblos | 63,72 | schwachblau | 59,41 | -3,4 | -1,3 |
| 22 | farblos | 61,86 | blaßblau | 58,08 | -3,1 | -1,3 |
| 23 | farblos | 64,07 | blaßblau | 60,21 | -3,7 | -1,8 |
| 24 | farblos | 64,68 | hellblau | 65,78 | -4,2 | -3,3 |
| 25 | farblos | 65,96 | hellblau | 65,95 | -4,4 | -2,7 |
| 26 | farblos | 62,89 | blaßblau | 59,21 | -3,9 | -1,0 |

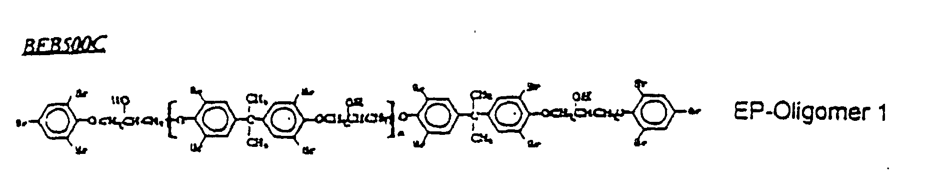

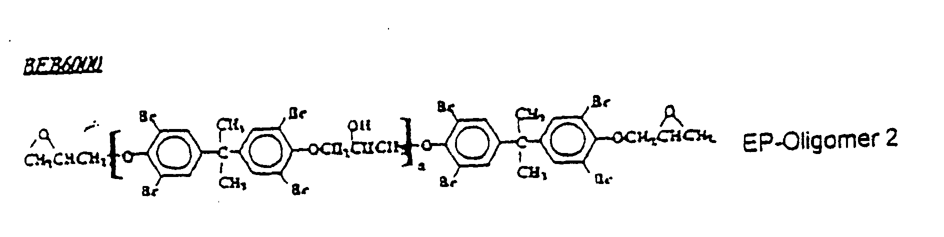

### Beispiel 2:

Stabilisierung von PA66 Natur, Wärmealterungsversuche bei 165°C,
Zusammensetzungen nach Messungen wie bei Beispiel 1.

**Tabelle 2**

| **Typ** | **Zusammensetzung** | **Halbwerts- zeit (h)** | **CTI- Wert** | **Verfärbung spritzfrisch** | **Verfärbung nach Kondi- tionierung** |
|---|---|---|---|---|---|
| Vergleich | PA66 Natur | 12 | 600 | farblos | farblos |
| Vergleich | CuJ/KJ | 140 | 450 | farblos | hellgrün |
| Vergleich | Kupferacetat/KBr | 90 | 400 | farblos | hellblau |
| Vergleich | Kupferstearat/KJ | 90 | 450 | gelblich | blaugrün |
| Vergleich | TPP-CuJ | 80 | 600 | farblos | blaustichig |
| Vergleich | MBI-CuJ | 60 | 600 | farblos | gelblich |
| Erfindung | TPP-CuJ/Phosphat 1 | 430 | 60 | farblos | fast farblos |
| Erfindung | TPP-CuJ/PDBS | 180 | 600 | farblos | fast farblos |
| Erfindung | TPP-CuCN/Phosphat 1 | 250 | 600 | farblos | farblos |
| Erfindung | MBI-CuJ/Phosphat 1 | 170 | 600 | gelblich | gelblich |
| Erfindung | TPP-CuJ/Teflonwachs | 110 | 600 | farblos | farblos |
| Erfindung | TPP-CuJ/Viton | 110 | 600 | farblos | farblos |
| Erfindung | TPP-CuJ/EP-Oligomer 1 | 180 | 600 | farblos | blaugrün |
| Erfindung | MBJ-CuJ/EP-Oligomer 1 | 180 | 600 | farblos | gelblich |
| Erfindung | TPPBr₆-CuJ | 220 | 600 | farblos | hellgrün |
| Erfindung | TPP-CuJ/PDBS/ Phosphit (20) | 350 | 600 | farblos | blaßblau |
| Erfindung | TPP-CuJ/Phosphat 1/ Phosphit (21) | 350 | 600 | farblos | blaßblau |
| Erfindung | (TPP-CuJ/Phosphat 1) in Polyamid/Phosphit (20) | 290 | 600 | farblos | hellblau |
| Erfindung | TPP-CuJ/PDBS/ Phosphit (20) | 190 | 600 | farblos | hellblau |
| Erfindung | (TPP-CuJ/PDBS) in Polyamid/Dinatriumhydrogenphosphonat | 170 | 550 | farblos | blaßblau |

Ebenso wie in Beispiel 1 zeichnen sich die erfindungsgemäßen Proben durch verbesserte Kriechstromfestigkeit sowie erhöhter thermischer Stabilität aus.

### Beispiel 3:

Stabilisierung von Polyamid 66, verstärkt mit 30% Glasfaseranteil,
Wärmealterungsversuche bei 165°C, Messungen wie in Beispiel 1. Mengenverhältnisse wie in Beispiel 1. Halbwertszeit bezieht sich auf die Biegefestigkeit.

**Tabelle 3**

| **Typ** | **Zusammensetzung** | **Halbwertszeit (h)** | **CTI- Wert** | **Verfärbung spritzfrisch** | **Verfärbung nach Konditionierung** |
|---|---|---|---|---|---|
| Vergleich | PA66 GF30 | 120 | 550 | farblos | farblos |
| Vergleich | CuJ/KJ | 1200 | 450 | gelblich | blaugrün |
| Vergleich | Kupferacetat/KBr | 900 | 400 | braun | braun |
| Erfindung | TPP-CuJ/Phosphat 1 | 1600 | 550 | farblos | fast farblos |
| Erfindung | TPP-CuJ/Teflonwachs | 900 | 550 | farblos | farblos |
| Erfindung | TPP-CuJ/Phosphat 1/ Phosphit (20) | 1300 | 550 | farblos | hellgrün |
| Erfindung | (TPP-CuJ/PDBS) in Polyamid/Phosphit (21) | 1400 | 550 | farblos | hellgrün |

Erfindungsgemäße Proben zeigen wiederum die schon in den Beispielen 1 und 2 aufgezeigten Verbesserungen, insbesondere ist hier aber noch zu sehen, daß erfindungsgemäße Proben eine geringere Verfärbungsneigung aufweisen.

### Beispiel 4:

Stabilisierung von PA66 Natur und PA66 GF30 mit Kupferstabilisatoren, Zugabe 100 ppm Kupfer, 1000 ppm Halogen, 1000 ppm Phosphit oder Phosphonat. Messung der Ausgangs-Schlagzähigkeiten: Izod-Kerbschlagzähigkeit bei PR66 Natur und Charpy (ungekerbt) bei PA66 GF30

**Tabelle 4**

| **Typ** | **Zusammensetzung** | **Halbwertszeit bei 165°C (h)** | **Schlagzähigkeit (KJ/m**^{**2**}**)** |
|---|---|---|---|
| Vergleich | PA66 GF30 | 120 | 45 (Charpy) |
| Vergleich | CuJ/KJ | 1200 | 35 (Charpy) |
| Erfindung | TPP-CuJ/Phosphat 1 | 1600 | 45 (Charpy) |
| Vergleich | PA66 Natur | 12 | 5,5 (Izod gekerbt) |
| Vergleich | CuJ/KJ | 140 | 4,0 (Izod gekerbt) |
| Erfindung | TPP-CuJ/Phosphat 1 | 430 | 5,5 (Izod gekerbt) |
| Erfindung | TPP-CuJ/Phosphat 1/ Phosphit (20) | 1.400 | 35 (Charpy) |
| Erfindung | (TPP-CuJ/PDBS) in Polyamid/ Phosphit (21) | 1.200 | 45 (Charpy) |

Auch mechanische Eigenschaften von stabilisierten Polyamiden lassen sich durch die Erfindung verbessern.

### Beispiel 5:

Extraktionsstabilität von PA6 und PA66 GF30 in Wasser und Ethanol. Bestimmung gemäß DIN 53738 Stabilisierung mit 100 ppm Kupfer und 1000 ppm Halogen, 1000 ppm Phosphit oder Phosphonat. Bestimmung des Extraktgehaltes nach 16 Stunden Rückflußkochen.

**Tabelle 5**

| **Typ** | **Zusammensetzung** | **Extraktmenge (%)** | **Extraktzusammensetzung** |
|---|---|---|---|
| Vergleich/Wasser | PA66 Natur | 0,4 | Caprolactam und Oligomere |
| Vergleich/Wasser | CuJ/KJ | 0,5 | w.o.;KJ,CuJ |
| Erfindung/Wasser | TPP-CuJ/PDBS | 0,3 | kein Kupfer oder Halogen |
| Erfindung/Wasser | MBI-CuJ/Phosphat 1 | 0,3 | kein Kupfer oder Halogen |
| | | | |
| Vergleich/Wasser | PA66 GF30 | 0,3 | AH-Salz, Oligomere |
| Vergleich/Wasser | CuJ/KJ | 0,4 | w.o.; KJ, CuJ |
| Erfindung/Wasser | TPP-CuJ/PDBS | 0,2 | kein Kupfer oder Halogen |
| Erfindung/Wasser | MBI-CuJ/Phosphat 1 | 0,2 | kein Kupfer oder Halogen |
| | | | |
| Vergleich/Ethanol | PA6 Natur | 0,8 | Caprolactam und Oligomere |
| Vergleich/Ethanol | CuJ/KJ | 0,9 | w.o.; KJ, CuJ |
| Erfindung/Ethanol | TPP-CuJ/PDBS | 0,6 | kein Kupfer oder Halogen |
| Erfindung/Ethanol | MBI-CuJ/Phosphat 1 | 0,6 | kein Kupfer oder Halogen |
| | | | |
| Vergleich/Ethanol | PA66 GF30 | 0,6 | AH-Salz, Oligomere |
| Vergleich/Ethanol | CuJ/KJ | 0,6 | w.o.; KJ, CuJ |
| Erfindung/Ethanol | TPP-CuJ/PDBS | 0,5 | kein Kupfer oder Halogen |
| | | | |
| Erfindung/Ethanol | MBI-CuJ/Phosphat 1 | 0,5 | kein Kupfer oder Halogen |
| | | | |
| Erfindung/Wasser | **PA 66 natur**: TPP-CuJ/ Phosphat 1/Phosphit (20) | 0,3 | kein Kupfer, Halogen oder Phosphor |
| Erfindung/Wasser | **PA 66 GF30:** TPP-CuJ/ Phosphat 1/Phosphit (20) | 0,2 | kein Kupfer, Halogen oder Phosphor |
| | | | |
| Erfindung/Ethanol | **PA 6 natur:** TPP-CuJ/ Phosphat 1/Phosphit (20) | 0,6 | kein Kupfer, Halogen oder Phosphor |
| Erfindung/Ethanol | **PA 66 GF30**: TPP-CuJ/ Phosphat 1/Phosphit (20) | 0,5 | kein Kupfer, Halogen oder Phosphor |

Erfindungsgemäße Proben zeichnen sich durch verbesserte Extraktionsstabilität aus, insbesondere treten keine Kupfer- und/oder Halogenverbindungen aus, was im Hinblick auf Anwendung für Elektronikteile sowie im Kosmetik-, Pharmazie- und Lebensmittelbereich vorteilhaft ist.

### Beispiel 6:

Hydrolysestabilisierung von PA66 GF 30, Abfall der mechanischen Werte, (Härte, Biegefestigkeit) nach Lagerung in 100% Glykol, 48 Stunden bei 135°C. 150 ppm Cu, 1500 ppm Halogen, 1000 ppm Phosphit oder Phosphonat.

**Tabelle 6**

| **Typ** | **Zusammensetzung** | **CTI- Wert** | **Kugeldruckhärte** | **Biegefestigkeit** | **Kugeldruckhärte (nL)** | **Biegefestigkeit (nL)** |
|---|---|---|---|---|---|---|
| Vergleich | CuJ/kJ/KBr | 450 | 141 | 276 | 91 | 130 |
| Erfindung | TPP-CuJ/ Phosphat 1 | 550 | 139 | 277 | 96 | 135 |
| Erfindung | MBI-CuJ/ Phosphat 1 | 550 | 136 | 274 | 95 | 136 |
| Erfindung | TPP-CuJ/ Phosphat 1/ Phosphit (20) | 550 | 140 | 278 | 95 | 135 |
| n.L.: nach Lagerung; Kugeldruckhärte gemessen nach ISO 2039/1; Biegefestigkeit gemessen nach DIN 53456. | | | | | | |

Erfindungsgemäße Proben zeichnen sich durch erhöhte Kriechstromfestigkeit bei gleichzeitig verbesserten mechanischen Eigenschaften nach Lagerung aus. Die erfindungsgemäßen Versuche demonstrieren, daß verbesserte Kriechstromfestigkeit und erhöhte Dauertemperaturfestigkeit mit den erfindungsgemäßen Polyamidzusammensetzungen erreicht werden kann. Auch die geringere Verfärbungsneigung der erfindungsgemäßen Polyamidzusammensetzungen wird eindrucksvoll bestätigt.

### Beispiel 7:

### Einsatz zur Herstellung von Polyamidfasem (PA6 und PA66).

Verarbeitungsverhalten: Stabilisierung durch 60 ppm Kupfer, 500 ppm Brom durch Zugabe von TTP-CuJ/Phosphat 1 bzw, MBI-CuJ/PDBS. Weitere Probe mit Stabilisierung mit TPP-CuJ/Phosphat1/Phosphit (20); 200 ppm Cu, 2000 ppm Br, 1000 ppm Phosphit.
1. Keine Belagsbildung bei PA66 Faserherstellung, innerhalb 14 Tage keine Unterbrechung, Farbe gleichmäßig ohne Schwankungen.
2. Weiß eingefärbte PA6.12-Monophile: keine Störungen, gleichmäßige Farbe.

Im Gegensatz dazu treten bei herkömmlichen Kupferstabilisatoren in der Regel nach 1 bis 2 Tagen Faserrisse durch Ausblühen (plate out) von Kupferverbindungen auf. Wärmealterungsbeständigkeit: stabilisiert wie oben

Prüfkriterium: bei Messung der Reißdehnung nach 4 Stunden bei 175°C dürfen die Werte nur um max. 5% abfallen (ASTM Norm).

Ergebnis: In allen Fällen erfüllt, bei Zugabe von Phosphit weiter verbesserte Farbe, weiter verbessertes Bewitterungsverhalten.

Insbesondere eignen sich erfindungsgemäße Polyamidzusammensetzungen zur Herstellung von Reifencord. Herkömmliche Stabilisatoren werden durch das sogenannte ENKA-Verfahren hergestellt. Dabei werden wäßrige Lösungen von Stabilisatoren über Polyamidgranulat gesprüht, die Lösung dringt ein und das Granulat wird danach getrocknet. Ein schwerwiegender Nachteil der aus diesem Granulat hergestellten Reifencordmaterialien ist die Anwesenheit wasserlöslicher Kupferverbindungen, die, in Reifen, zu einer Migration in den den Reifencord umgebenden Kautschuk neigen. Dies führt zu einer beschleunigten Alterung des Reifens, da Kupfer als Gummigift wirkt, insbesondere gegenüber EPDM. Dieser Nachteil tritt bei den erfindungsgemäßen Polyamiden nicht auf.

## Patentansprüche

1. Stabilisierte Polyamidzusammensetzung, **dadurch gekennzeichnet, dass** als Stabilisator mindestens ein Komplex des Kupfers sowie mindestens eine organische Halogenverbindung enthalten ist, wobei die organische Halogenverbindung ausgewählt ist aus der Gruppe, umfassend Dekabromdiphenyl, Dekabromdiphenolether, chlorierte bzw. bromierte Styrololigomere, Polydibromstyrol, Tetrabrombisphenol-A, Tetrabisphenol-A-Derivate, chlorierte Dimethandibenzo(a,e)cyclooctenderivate, Chlorparaffin, Polyvinylchlorid, Polyvinylidenchlorid, Polytetrafluoroethylen, Fluorkantschuk halogenierte aliphatische oder aromatische Phosphate oder Polyphosphonate, und Dibromdioxaphosphorinanderivate.

2. Stabilisierte Polyamidzusammensetzung nach Anspruch 1, **dadurch gekennzeichnet, dass** die organische Halogenverbindung eine chlorhaltige und/oder bromhaltige Verbindung ist.

3. Stabilisierte Polyamidzusammensetzung nach Anspruch 1 oder 2, **dadurch gekennzeichnet, dass** das Molverhältnis Kupfer: Halogen 1 : 1,5 -15 beträgt.

4. Stabilisierte Polyamidzusammensetzung nach mindestens einem der vorstehenden Ansprüche, **dadurch gekennzeichnet, dass** der mindestens eine Komplex des Kupfers ein Komplex mit einer Phosphinverbindung und/oder Mercaptobenzimidazolverbindung ist.

5. Verwendung mindestens eines Komplexes des Kupfers in Kombination mit mindestens einer organischen Halogenverbindung zur Stabilisierung von Polyamiden, wobei die organische Halogenverbindung ausgewählt ist aus der Gruppe, umfassend Dekabromdiphenyl, Dekabromdiphenolether, chlorierte bzw. bromierte Styrololigomere, Polydibromstyrol, Tetrabrombisphenol-A, Tetrabisphenol-A-Derivate, chlorierte Dimethandibenzo(a,e)cyclooctenderivate, Chlorparaffin, Polyvinylchlorid, Polyvinylidenchlorid, Polytetrafluoroethylen, Fluorkantschutz, halogenierte aliphatische oder aromatische Phosphate oder Polyphosphonate, und Dibromdioxaphosphorinanderivate.

6. Verwendung nach Anspruch 5, **dadurch gekennzeichnet, dass** der mindestens eine Komplex des Kupfers ein Komplex mit einer Phosphin- und/oder Mercaptobenzimidazolverbindung ist.

7. Verfahren zur Herstellung einer stabilisierten Polyamidzusammensetzung umfassend das Mischen mindestens eines Komplexes des Kupfers sowie mindestens einer organischen Halogenverbindung mit mindestens einem Polyamid, wobei die organische Halogenverbindung ausgewählt ist aus der Gruppe, umfassend Dekabromdiphenyl, Dekabromdiphenolether, chlorierte bzw. bromierte Styrololigomere, Polydibromstyrol, Tetrabrombisphenol-A, Tetrabisphenol-A-Derivate, chlorierte Dimethandibenzo(a,e)cyclooctenderiyate, Chlorparaffin, Polyvinylchlorid, Polyvinylidenchlorid, Polytetrafluoroethylen, Fluorkantschuk, halogenierte aliphatische oder aromatische Phosphate oder Polyphosphonate, und Dibromdioxaphosphorinanderivate.

8. Verfahren nach Anspruch 7, **dadurch gekennzeichnet, dass** der mindestens eine Komplex des Kupfers und die mindestens eine organische Halogenverbindung in Form eines Masterbatch eingebracht werden.

9. Verfahren nach einem der Ansprüche 7 oder 8, **dadurch gekennzeichnet, dass** der mindestens eine Komplex des Kupfers ein Komplex mit einer Phosphin- und/oder Mercaptobenzimidazolverbindung ist.

10. Stabilisierte Polyamidzusammensetzung, **dadurch gekennzeichnet, dass** als Stabilisator mindestens ein Komplex des Kupfers mit einer Phosphinverbindung und/oder Mercaptobenzimidazolverbindung enthalten ist, welcher Halogen-Kohlenstoff-Bindungen aufweist.

11. Verwendung mindestens eines Komplexes des Kupfers mit einer Phosphinverbindung und/oder einer Mercaptobenzimidazolverbindung welcher Halogen-Kohlenstoff-Bindungen aufweist, zur Stabilisierung von Polyamiden.

12. Stabilisierte Polyamidzusammensetzungen nach mindestens einem der Ansprüche 1 bis 4, **dadurch gekennzeichnet, dass** weiterhin mindestens ein organisches Phosphit, anorganisches Phosphonat oder anorganisches Hypophosphit enthalten ist.

13. Verfahren nach mindestens einem der Ansprüche 7 bis 9, **dadurch gekennzeichnet, dass** zu der nach mindestens einem der Ansprüche 7 bis 9 erhaltenen Mischung in einem weiteren Verarbeitungsschritt mindestens ein organisches Phosphit, anorganisches Phosphonat oder anorganisches Hypophosphit zugegeben wird.

## Claims

1. Stabilized polyamide composition, **characterized in that** as stabilizer at least one copper complex and at least one organic halogen compound is contained, wherein the organic halogen compound is selected from the group consisting of decabromodiphenyl, decabromodiphenol ether, chlorinated or brominated styrene oligomers, polydibromostyrene, tetrabromobisphenol-A, tetrabisphenol-A derivatives, chlorinated dimethanedibenzo(a,e)cyclooctene derivatives, chloroparaffin, polyvinyl chloride, polyvinylidene chloride, polytetrafluoroethylene, fluorinated rubber, halogenated aliphatic or aromatic phosphates or polyphosphonates, and dibromodioxaphosphorinane derivatives.

2. Stabilized polyamide composition in accordance with claim 1, **characterized in that** the organic halogen compound is a chlorine-containing or bromine-containing compound.

3. Stabilized polyamide composition in accordance with claim 1 or 2, **characterized in that** the molar ratio copper to halogen is 1:1.5-15.

4. Stabilized polyamide composition in accordance with at least one of the preceding claims, **characterized in that** the at least one copper complex is a complex of a phosphine compound and/or mercaptobenzimidazole compound.

5. Use of at least one copper complex in combination with at least one organic halogen compound for stabilizing polyamides, wherein the organic halogen compound is selected from the group consisting of decabromodiphenyl, decabromodiphenol ether, chlorinated or brominated styrene oligomers, polydibromostyrene, tetrabromobisphenol-A, tetrabisphenol-A derivatives, chlorinated dimethanedibenzo(a,e)cyclooctene derivatives, chloroparaffin, polyvinyl chloride, polyvinylidene chloride, polytetrafluoroethylene, fluorine edge protection, halogenated aliphatic or aromatic phosphates or polyphosphonates, and dibromodioxaphosphorinane derivatives.

6. Use in accordance with claim 5, **characterized in that** the at least one copper complex is a complex with a phosphine and/or mercaptobenzimidazole compound.

7. Process for the preparation of a stabilized polyamide composition, comprising the mixing of at least one copper complex and of at least one organic halogen compound with at least one polyamide, wherein the organic halogen compound is selected from the group consisting of decabromodiphenyl, decabromodiphenol ether, chlorinated or brominated styrene oligomers, polydibromostyrene, tetrabromobisphenol-A, tetrabisphenol-A derivatives, chlorinated dimethanedibenzo(a,e)cyclooctene derivatives, chloroparaffin, polyvinyl chloride, polyvinylidene chloride, polytetrafluoroethylene, fluorinated rubber, halogenated aliphatic or aromatic phosphates or polyphosphonates, and dibromodioxaphosphorinane derivatives.

8. Process in accordance with claim 7, **characterized in that** the at least one copper complex and the at least one organic halogen compound are added in the form of a master batch.

9. Process in accordance with one of claims 7 or 8, **characterized in that** the at least one copper complex is a complex with a phosphine and/or mercaptobenzimidazole compound.

10. Stabilized polyamide composition, **characterized in that** as stabilizer at least one complex of copper with a phosphine compound and/or mercaptobenzimidazole compound is contained, wherein the complex possesses halogen-carbon bonds.

11. Use of at least one copper complex with a phosphine compound and/or mercaptobenzimidazole compound for the stabilization of polyamides, wherein the complex possesses halogen-carbon bonds.

12. Stabilized polyamide compositions in accordance with at least one of claims 1 to 4, **characterized in that** furthermore at least one organic phosphite, inorganic phosphonate or inorganic hypophosphite is contained.

13. Process in accordance with at least one of the claims 7 to 9, **characterized in that** at least one organic phosphate, inorganic phosphonate or inorganic hypophosphite is added, in a separate additional processing step to the mixture obtained in accordance with at least one of claims 7 to 9.

## Revendications

1. Composition stabilisée de polyamide, **caractérisée en ce qu'**elle contient comme stabilisant, au moins un complexe du cuivre ainsi qu'au moins un composé organique halogéné, où le composé organique halogéné est choisi parmi le groupe comprenant le décabromodiphényle, le décabromodiphénoléther, les oligomères chlorés ou bromés du styrène, le polydibromostyrène, le tétrabromobisphénol-A, les dérivés du tétrabromobisphénol-A, les dérivés chlorés du diméthanedibenzo[a,e]cyclooctène, la chloroparaffine, le poly(chlorure de vinyle), le poly(chlorure de vinylidène), le polytétrafluoroéthylène, un caoutchouc fluoré, les phosphates ou polyphosphonates aliphatiques ou aromatiques halogénés, et les dérivés dibromodioxaphosphorinanes.

2. Composition stabilisée de polyamide selon la revendication 1, **caractérisée en ce que** le composé organique halogéné est un composé chloré et/ou bromé.

3. Composition stabilisée de polyamide selon la revendication 1 ou 2, **caractérisée en ce que** le rapport molaire cuivre:halogène est de 1:1,5-15.

4. Composition stabilisée de polyamide selon l'une quelconque des revendications précédentes, **caractérisée en ce que** le au moins un complexe du cuivre est un complexe avec un composé phosphine et/ou un composé mercaptobenzimidazole.

5. Utilisation d'au moins un complexe du cuivre en combinaison avec au moins un composé organique halogéné pour la stabilisation de polyamides, où le composé organique halogéné est choisi parmi le groupe comprenant le décabromodiphényle, le décabromodiphénoléther, les oligomères chlorés ou bromés du styrène, le polydibromostyrène, le tétrabromobisphénol-A, les dérivés du tétrabromobisphénol-A, les dérivés chlorés du diméthanedibenzo[a,e]cyclooctène, la chloroparaffine, le poly(chlorure de vinyle), le poly(chlorure de vinylidène), le polytétrafluoroéthylène, un caoutchouc fluoré, les phosphates ou polyphosphonates aliphatiques ou aromatiques halogénés, et les dérivés dibromodioxaphosphorinanes.

6. Utilisation selon la revendication 5, **caractérisée en ce que** le au moins un complexe du cuivre est un complexe avec un composé phosphine et/ou un composé mercaptobenzimidazole.

7. Procédé de préparation d'une composition stabilisée de polyamide, comprenant le mélange d'au moins un complexe du cuivre ainsi que d'au moins un composé organique halogéné avec au moins un polyamide, où le composé organique halogéné est choisi parmi le groupe comprenant le décabromodiphényle, le décabromodiphénoléther, les oligomères chlorés ou bromés du styrène, le polydibromostyrène, le tétrabromobisphénol-A, les dérivés du tétrabromobisphénol-A, les dérivés chlorés du diméthanedibenzo[a,e]cyclooctène, la chloroparaffine, le poly(chlorure de vinyle), le poly(chlorure de vinylidène), le polytétrafluoroéthylène, un caoutchouc fluoré, les phosphates ou polyphosphonates aliphatiques ou aromatiques halogénés, et les dérivés dibromodioxaphosphorinanes.

8. Procédé selon la revendication 7, **caractérisé en ce que** le au moins un complexe de cuivre et le au moins un composé organique halogéné sont mis en oeuvre sous la forme d'un mélange-maître (« Masterbatch »).

9. Procédé selon la revendication 7 ou 8, **caractérisé en ce que** le au moins un complexe de cuivre est un complexe avec un composé phosphine et/ou un composé mercaptobenzimidazole.

10. Composition stabilisée de polyamide, **caractérisée en ce qu'**elle contient comme stabilisant, au moins un complexe du cuivre avec au un composé phosphine et/ou un composé mercaptobenzimidazole, qui présente des liaisons halogène-carbone.

11. Utilisation d'au moins un complexe du cuivre avec un composé phosphine et/ou un composé mercaptobenzimidazole, qui présente des liaisons halogène-carbone, pour la stabilisation de polyamides.

12. Compositions stabilisées de polyamide selon au moins une des revendications 1 à 4, **caractérisées en ce qu'**elles contiennent en outre au moins, un phosphite organique, un phosphonate inorganique ou un hypophosphite inorganique.

13. Procédé selon au moins l'une des revendications 7 à 9, **caractérisé en ce qu'**au mélange obtenu selon au moins une des revendications 7 à 9, on ajoute dans une autre étape de traitement, au moins un phosphite organique, un phosphonate inorganique ou un hypophosphite inorganique.
